# EUROPEAN PATENT APPLICATION

(11) **EP 4 769 205 A1**
(43) Date of publication of application: **01.07.2026**
(21) Application number: 25227408.9
(22) Date of filing: 29.12.2025
(51) Int. Cl.: G06F 40/30, G06F 40/216, G06F 40/56, G06F 40/44, G06F 40/131, G06F 16/3329

(54) **SYSTEMS AND METHODS FOR PROCESSING INPUT DOCUMENTS**

(30) Priority: 30.12.2024 IN 202411104399
(71) Applicant: ADP, Inc., Roseland, NJ 07068 (US)
(72) Inventor: AGRAWAL, Anuj, Roseland (US); TADYSETTY, Ravi Kumar, Roseland (US); SHARMA, Ravi Shankar, Roseland (US); KSS, Srihari, Roseland (US); TAMMANA, Kedar, Roseland (US)
(74) Representative: Morrall, Jonathan Ian McLachlan

(57) **Abstract**

A system for processing employment documents includes one or more processors, coupled with memory. The one or more processors are configured to receive an input document, determine that the input document is associated with a first field and a second field, extract a first extracted text string corresponding to the first field and a second extracted text string corresponding to the second field, generate a first generated text string associated with the first field based on the first extracted text string, and generate a second generated text string associated with the second field based on the second extracted text string.

## Description

### CROSS-REFERENCE TO RELATED APPLICATION

The present application claims the benefit of and priority to Indian Provisional Patent Application No. 202411104399, filed December 30, 2024, the disclosure of which is incorporated herein by reference in its entirety.

### TECHNICAL FIELD

The present application relates generally computing technology, and particularly to systems and methods for processing input documents.

### BACKGROUND

Conventional methods for processing input documents may require significant manual and time-consuming inputs because policies often vary per company. For example, each company may have different time off policies governing, for example, different types of time off, how many days can be taken, etc.

### SUMMARY

One implementation is directed towards a system for processing employment documents. The system includes one or more processors, coupled with memory. The one or more processors are configured to receive an input document, determine that the input document is associated with a first field and a second field, extract a first extracted text string corresponding to the first field and a second extracted text string corresponding to the second field, generate a first generated text string associated with the first field based on the first extracted text string, and generate a second generated text string associated with the second field based on the second extracted text string.

In some implementations, the one or more processors are configured to extract the first extracted text string and the second extracted text string using a first machine learning model, generate the first generated text string using a second machine learning model, and generate the second generated text string using a third machine learning model. The first generated text string and the second generated text string can be generated in parallel. The first machine learning model, the second machine learning model, and the third machine learning model can be large language models (LLMs).

In some implementations, the one or more processors are further configured to determine a plurality of stored text strings associated with the first field and the second field. The second machine learning model and the third machine learning model can use the stored text strings to generate the first generated text string and the second generated text string. The one or more processors can be further configured to determine a first page of the input document associated with the first extracted text string and a second page associated with the second extracted text string and provide the first page to the second machine learning model and the second page to the third machine learning model to generate the first generated text string from the first page and the second generated text string from the second page. The one or more processors can be further configured to store the first generated text string and a first association between the first generated text string, the first field, and the first page and store the second generated text string and a second association between the second generated text string, the second field, and the second page.

In some implementations, the one or more processors are further configured to compare the first generated text string and the second generated text string to a plurality of attributes, the attributes corresponding to the first field and the second field and after determining that the first extracted text string and the second extract text string does not include at least one of the attributes, generate a notification. The one or more processors can be further configured to compare the first generated text string to a first text string threshold and a second text string threshold and the second generated text string to the first text string threshold and the second text string threshold and after determining that the first generated text string is below the first text string threshold or above the second text string threshold or that the second generated text string is below the first text string threshold or above the second text string threshold, generate a notification.

In some implementations, the first extracted text string and the second extracted text string are associated with a first policy and a second policy of the input documents and the first policy includes the first field and the second policy includes the second field. The one or more processors can be further configured to receive a user query and generate a response to the user query based on the first generated text string and the second generated text string using a fourth machine learning model. The one or more processors can be further configured to validate the first generated text string and the second generated text string using at least one machine learning model, where the at least one machine learning model generates at least one score and at least one confidence value for the first generated text string and the second generated text string, the at least one machine learning model implementing chain of thoughts to determine the at least one confidence value.

Another implementation is directed to a computer-implemented method. The computer-implemented method can include extracting, by a first machine learning model, a plurality of policies from an input document. The computer-implemented method can include extracting a plurality of first computing threads corresponding to a first policy of the policies and a plurality of second computing threads corresponding to a second policy of the policies. The computer-implemented method can include extracting, using one of a plurality of second machine learning models, a first attribute from the first policy of the policies via a first computing thread of the first computing threads. The computer-implemented method can include extracting, using one of the second machine learning models, a second attribute from the second policy of the policies via a second computing thread of the second computing threads. The computer-implemented method can include after determining that the first attribute and the second attribute are below an attribute threshold, generating a notification requesting user input.

In some implementations, the method can include interpreting the first computing threads and the second computing threads, where the first attribute and the second attributes are extracted according to interpretations of the first computing threads and the second computing threads, respectively. The input document can include a plurality of pages, each of the policies associated with at least one of the pages. The computer-implemented method can include providing, by the first machine learning model, a plurality of first pages associated with the first policy and a plurality of second pages associated with the second policy to the second machine learning models before extracting the first attribute and the second attribute. The computer-implemented method can include generating, by a third machine learning model, using chain of thoughts, at least one confidence value of the first attribute and the second attribute and after determining that the at least one confidence value is above a confidence threshold, comparing the first attribute and the second attribute to the attribute threshold.

In some implementations, the computer-implemented method can include after generating the notification requesting the user input, receiving the user input. The computer-implemented method can include updating at least one of the first attribute or the second attribute using the user input. The computer-implemented method can include comparing the at least one of the first attribute or the second attribute to the attribute threshold. The computer-implemented method can include receiving a user query associated with the input document. The computer-implemented method can include generating a response to the user query based on the attributes.

In some implementations, a system can perform the computer-implemented method. A computer program product can include computer-executable instructions for performing the computer-implemented method.

### BRIEF DESCRIPTION OF THE DRAWINGS

The disclosure will become more fully understood from the following detailed description, taken in conjunction with the accompanying Figures, wherein like reference numerals refer to like elements unless otherwise indicated, in which:
FIG. 1 is an illustrative example of a system for processing input documents, in accordance with one or more embodiments;
FIG. 2 is an illustrative example of a process implemented by the system of FIG. 1 to process input documents, in accordance with one or more embodiments;
FIG. 3 is an illustrative example of a process implemented by the system of FIG. 1 to process input documents, in accordance with one or more embodiments;
FIG. 4 is an illustrative example of a process implemented by the system of FIG. 1 to process input documents, in accordance with one or more embodiments;
FIG. 5 is another illustrative example of a process implemented by the system of FIG. 1 to process input documents, in accordance with one or more embodiments;
FIG. 6 is an illustrative example of a user interface generated by the system of FIG. 1, in accordance with one or more embodiments;
FIG. 7 is a flow diagram of an example method implemented by the system of FIG. 1, in accordance with one or more embodiments; and
FIG. 8 illustrates a block diagram of an example computing system for implementing the implementations of the present solution, including, for example, the system depicted in FIG. 1, the processes depicted in FIGS. 2-5, the user interface depicted in FIG. 6, and the method depicted in FIG. 7.

It will be recognized that the Figures are the schematic representations for purposes of illustration. The Figures are provided for the purpose of illustrating one or more implementations with the explicit understanding that the Figures will not be used to limit the scope of the meaning of the claims.

### DETAILED DESCRIPTION

Following below are more detailed descriptions of various concepts related to, and implementations of, methods, apparatuses, and systems for processing input documents (e.g., an employee handbook, employee document, a policy handbook, etc.). The various concepts introduced above and discussed in greater detail below may be implemented in any of a number of ways, as the described concepts are not limited to any particular manner of implementation. Examples of specific implementations and applications are provided primarily for illustrative purposes.

Companies have various policies (e.g., guidelines, procedures, etc.) governing employees. Many of these policies relate to taking time off. The policies may be directed, for example, toward how many days of leave can be taken, when the days expire, different types of leave, etc. These policies are typically set forth in one or more input documents. Due to the variety and length of these input documents, it may be difficult to determine the policies, and it may also be a time consuming, manual process to analyze input documents and determine policies per company. For example, it is often necessary to manually analyze several lengthy and complex input documents from a company in order to configure a system to receive, process, and record time off requests.

Implementations described herein relate to a system that can receive a plurality of input documents, such as an employee handbook, and extract (e.g., determine, interpret, etc.) each policy contained therein using at least one machine learning model, such as a large language model. The machine learning model may receive feedback from users regarding the accuracy of the policies extracted, and the weights of the machine learning model may be updated based on the feedback. The machine learning model may extract information from the input documents based on instructions provided by the user. For example, the user may configure the machine learning model to extract information from the input documents, such as a number of policies in each of the input document, sections per policy in the input document, etc. As another example, the machine learning model may extract text, and the machine learning model can interpret the text to determine a number of policies in the input documents. The instructions to the machine learning model may include a plurality of text strings, such as queries. Following extraction of the information, the information can be processed to extract attributes (e.g., guidelines, rules, characteristics, policy-attributes, etc.) related to the policy.

The examples described herein use an employee PTO policy as an example, however, the technical solutions described herein are not limited to a particular type of policy.

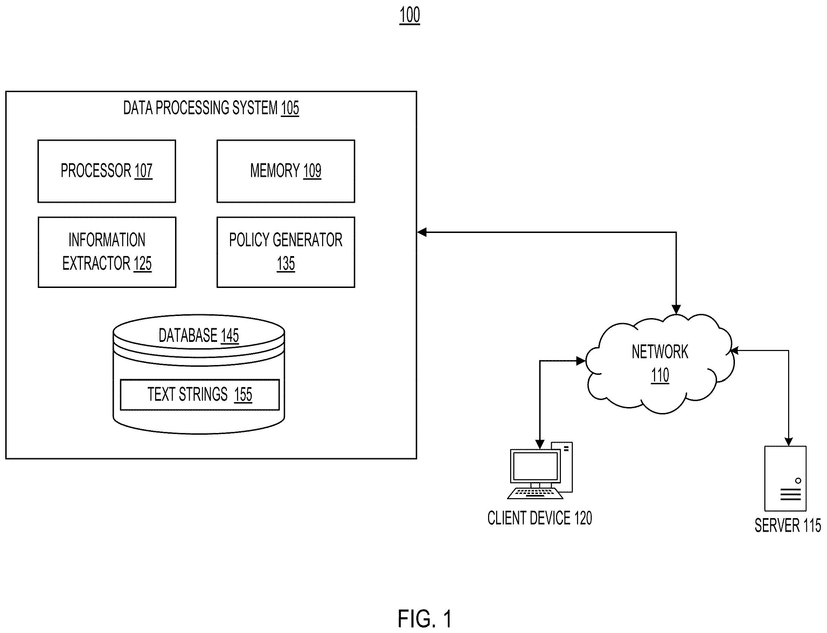

FIG. 1 is an illustrative example system 100 for processing input documents (e.g., employee document, employee handbook, policy handbook, policy documents, etc.). The system 100 includes at least one data processing system 105, at least one network 110, and one or more client devices 120. The data processing system 105 includes at least one information extractor 125, at least one policy generator 135, and at least one database 145.

The data processing system 105 includes at least one processor 107 and a memory 109 (e.g., a processing circuit, etc.). The memory 109 can store processor-executable instructions that, when executed by processor 107, cause the processor 107 to perform one or more of the operations described herein. The processor 107 can include a microprocessor, an application-specific integrated circuit (ASIC), a field-programmable gate array (FPGA), etc., or combinations thereof. The memory 109 can include, but is not limited to, electronic, optical, magnetic, or any other storage or transmission device capable of providing the processor 107 with program instructions. The memory 109 can further include a floppy disk, CD-ROM, DVD, magnetic disk, memory chip, ASIC, FPGA, read-only memory (ROM), random-access memory (RAM), electrically erasable programmable ROM (EEPROM), erasable programmable ROM (EPROM), flash memory, optical media, or any other suitable memory from which the processor 107 can read instructions. The instructions can include code from any suitable computer programming language. The data processing system 105 can include one or more computing devices or servers that can perform various functions as described herein. The data processing system 105 can include any or all of the components and perform any or all of the functions of the server 115.

The network 110 can include computer networks such as the Internet, local, wide, metro. or other area networks, intranets, satellite networks, other computer networks such as voice or data mobile phone communication networks, and combinations thereof. The data processing system 105 can communicate via the network 110, for example, with one or more client devices 120. The network 110 can be any form of computer network that can relay information between the data processing system 105, the one or more client devices 120, and one or more information sources, such as web servers or external databases/storage devices, amongst others. In some implementations, the network 110 can include the Internet and/or other types of data networks, such as a local area network (LAN), a wide area network (WAN), a cellular network, a satellite network, or other types of data networks. The network 110 can also include any number of computing devices (e.g., computers, servers, routers, network switches, etc.) that are configured to receive and/or transmit data within the network 110.

Each of the client devices 120 can include at least one processor (e.g., similar to the processor 107, etc.) and a memory (e.g. similar to the memory 109, etc.). The memory can store processor-executable instructions that, when executed by processor, cause the processor to perform one or more of the operations described herein. The processor can include a microprocessor, an ASIC, an FPGA, etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, ROM, RAM, EEPROM, EPROM, flash memory, optical media, or any other suitable memory from which the processor can read instructions. The instructions can include code from any suitable computer programming language. The client devices 120 can include one or more computing devices or servers that can perform various functions as described herein. The one or more client devices 120 can include any or all of the components and perform any or all of the functions described herein.

Each of the client devices 120 can be, but is not limited to, a personal computing device (e.g., a desktop, a laptop, etc.), a mobile device (e.g., a smartphone, tablet, etc.), a television device (e.g., smart television, set-top box, etc.), or another type of computing device. Each of the client devices 120 can be implemented using hardware or a combination of software and hardware. Each of the client devices 120 can include a display or display portion. The display can include a display portion of a television, a display portion of a computing device, or another type of interactive display (e.g., a touchscreen, a display, etc.) and one or more input/output (I/O) devices (e.g., a mouse, a keyboard, digital keypad, etc.). The display can include a touch screen displaying an application. The display can include a border region (e.g., side border, top border, bottom border, etc.).

The application can include a web application, a server application, a resource, a desktop, or a file. In some implementations, the application can include a local application (e.g., local to a client device 120, etc.), hosted application, Software as a Service (SaaS) application, virtual application, mobile application, and other forms of content. In some implementations, the application can include or correspond to applications provided by remote servers or third-party servers.

Each of the client devices 120 can be a computing device configured to communicate via the network 110 to access information resources, such as web pages via a web browser, or application resources via a native application executing on the client device 120. When accessing information resources, the client device 120 can execute instructions (e.g., embedded in the native applications, in the information resources, etc.) that cause the client device 120 to display application interfaces.

The server 115 can be a specialized computer or software that houses application programs and manages program data. Additionally, the server 115 can provide resources, including details related to functions such as payroll processing, employee recruitment, and personnel management, among others. More than one of the server 115 can be utilized to store data, facilitate applications, and offer services to clients. The server 115 can include OCR models and can perform OCR on information provided by the data processing system 105.

In some implementations, the data processing system 105 can include a database 145. The database 145 can be accessed using one or more memory addresses, index values, or identifiers of any item, structure, or region maintained in the database 145. The database 145 can be accessed by the components of the data processing system 105, or any other computing device described herein. In some implementations, the database 145 can be internal to the data processing system 105. In some implementations, the database 145 can exist external to the data processing system 105 and can be accessed via the network 110.

The database 145 can include a plurality of text strings 155. The text strings 155 can be used to instruct a model, such as a large language model, to extract information from a plurality of input documents. Each of the text strings 155 may be associated with one or more sections (e.g., fields, parts, etc.) of a policy. For example, the input documents may contain a plurality of policies, each containing a plurality of fields. Each of the text strings 155 may be directed to a field within one input document. For example, the policy may be directed to time off, and a field may be directed to wait time. At least one of the text string 155 can be directed to the field of wait time. The text strings 155 may be provided by a user and stored in the database 145.

In some implementations, the data processing system 105 can store, in one or more regions of the memory of the data processing system 105, or in the database 145, the results of any or all computations, determinations, selections, identifications, generations, constructions, or calculations in one or more data structures indexed or identified with appropriate values. Any or all values stored in the database 145 can be accessed by any computing device described herein, such as the data processing system 105, to perform any of the functionalities or functions described herein. In implementations where the database 145 forms a part of a cloud computing system, the database 145 can be a distributed storage medium in a cloud computing system and can be accessed by any of the components of the data processing system 105, by one or more client devices 120, or by any other computing devices described herein.

The data processing system 105 can include an information extractor 125, which can be a module, script, library, or function. The information extractor 125 can receive the input documents from a user. The input documents may include a Word document (e.g., .docx, etc.), a portable document format (PDF), a PDF with images, a PDF with images and text, or any other document format. Once received, the information extractor 125 can perform optical character recognition (OCR) to identify and extract characters from the input document and convert the input documents into a machine-readable format. The information extractor 125 may include at least one model, such as a first machine learning model, to perform the OCR. The information extractor 125 can convert the input documents into images, and store the images of the input documents in the database 145.

The information extractor 125 may determine a plurality of policies from each of the input documents, and after determining the policies, determine a plurality of fields associated with each of the policies. The policies can be headers on the pages of the input documents, and the information extractor 125 can associate each of the fields with the policies. The information extractor 125 may include at least one large language model (LLM) to extract text corresponding to each of the fields. The LLM may be instructed by the user to determine policies and extract text (e.g., text strings, extracted text strings, etc.) based on the instructions. The information extractor 125 can also be instructed to provide a number of policies within the input documents. Based on the number of policies and policies identified, the information extractor 125 may identify the fields within each policy, and extract information regarding, for example, balances and accrual, rules, waiting period to take time off, etc. The information extractor 125 may determine the fields of the policy based on instructions provided by the user and schema (e.g., a desired output, etc.).

For example, the information extractor 125 may determine that the input document is associated with a first field and a second field. The information extractor 125 can then extract a first extracted text string corresponding to the first field and a second extracted text string corresponding to the second field. The first field may be "Personal/Sick Leave Benefits" while the second field is "Family Leave." The information extractor 125 may detect the first field and the second field on the input documents, and extract text strings associated with each of the first field and the second field. The first extracted text string may include "at-will employees and contracted teachers and teaching assistants receive 2 personal days per year." The second extracted text string may include "eligible employees may request up to a maximum of 12 weeks of family leave within any 12-month period." The first extracted text string and the second extracted text sting can include any number of sentences of characters associated with each of the fields on the input documents.

Based on the extracted text strings of the fields of the input document, the information extractor 125 can further extract text strings 155 (e.g., stored text strings, etc.) from the database 145 and use the text strings 155 to generate attributes (e.g., guidelines, rules, generated text strings, policy-attributes, etc.) of the fields for each of the policies from the input documents. For example, each text string 155 corresponds to an attribute of a policy set by the user. The text strings 155 may form a schema (e.g., rules, guidelines, etc.) for which the information extractor 125 extracts the attributes from the extracted text strings. The information extractor 125 can include a plurality of LLMs to determine the attributes based on the fields detected by and text strings extracted by the information extractor 125. The information extractor 125 can extract and/or generate the attributes based on the extracted text strings using the text strings 155 (e.g., schema, etc.) The attributes may herein also be referred to as generated text strings.

For example, using the text strings 155, the information extractor 125 may extract a first generated text string of "2 personal days" for at-will employees and contracted teachers and teaching assistants for the first field using the first extracted text string, and a second generated text string of "maximum 12 weeks within any 12-month period" for the second field using the second extracted text sting. The information extractor 125 may apply the text strings 155 to the extracted text strings to determine the generated text strings.

The information extractor 125 can extract text corresponding to the policies, and interpret the text to determine generated text strings of the policies. For example, in response to determining that a field of the input documents is time off, the information extractor 125 can extract the text corresponding to time off, and extract a first extracted text string of "40 hours each work week." In response, the information extractor 125 can interpret the first extracted text string to indicate that time off is tracked in hours, and can extract a first generated text string from the first extracted text string of 40 hours according to the interpretation. For example, the interpretation can guide the information extractor 125 to extract the generated text strings from the extracted text strings. The information extractor 125 can use the interpretation that time off is tracked in hours to determine other generated text strings of the field from the extracted text strings, such as that a full paid time off day is 8 hours.

As another example, the information extractor 125 can determine, based on extracted text strings, that the policy includes generated text strings for at least two types of employees, such as at least one generated text string for exempt employees and at least one generated text string for non-exempt employees. Based off the extracted text string, the information extractor 125 can interpret that exempt employees and non-exempt employees have different generated text strings for time off, and can extract generated text strings for each of the fields of the time off policy according to the interpretation.

As another example, the information extractor 125 can determine that the extracted text string states that vacation is awarded based on length of service. Based on the extracted text string, the information extractor 125 can interpret the extracted text string to indicate that accrual of vacation days varies based on tenure and years of service, and can use the interpretation to determine the generated text string for the extracted text string.

In various implementations, the information extractor 125 can determine at least one page of the input document that each of the fields is located on. For example, the LLM can determine the pages on which each policy and each field of each policy is located on within the input document. Then, to extract the text strings and generate the attributes, the information extractor 125 can provide the at least one page associated with each policy to each of the LLMs. For example, a first LLM receives two pages of the input document associated with the field of the policy the first LLM is extracting text strings and generating at least one attribute from. Providing specific pages to each LLM for processing can improve latency, efficiency, and cost.

The information extractor 125 may determine the fields and generate the attributes from each of the fields in parallel. The information extractor 125 may use the text strings 155 alongside the extracted text strings to identify attributes for each field of each policy. The information extractor 125 may apply multiple text strings 155 at once (e.g., in parallel, etc.) to the LLMs to extract the attributes from the extracted text strings. For example, the information extractor 125 includes at least a second machine learning model and a third machine learning model. The first extracted text string may be applied to the first machine learning model to generate the first generated text string based on the first extracted text string using at least one text string 155, and the second extracted text string may be applied to the second machine learning model to generate the second generated text string based on the second extracted text string using at least one the text string 155.

The information extractor 125 may then store the attributes along with the respective field of the policy (e.g., store the response with an association to the policy, etc.). For example, the information extractor 125 stores the first generated text string and a first association between the first generated text string and the first field. As another example, the information extractor 125 stores the second generated text string and a second association between the second generated text string and the second field.

By performing the section determination and information extraction in parallel, the information extractor 125 may decrease latency and save LLM tokens, which saves overall costs. The accuracy of the LLM included in the information extractor 125 may also be improved by providing multiple text strings 155 which enables greater specificity to the LLM for information to pull from each field. Each LLM may also implement a chain of thoughts (CoT) to extract the extracted text strings and generate the generated text strings. CoT can improve reasoning of the LLM and can prompt and guide the LLM to extract the extracted text strings and generate generated text strings step by step. For example, to generate the generated text strings, using CoT can provide the LLM with prompts such as "what question is being answered?" and "what page is the question on?" CoT can guide the LLM to at least extract the extracted text string and generate the generated text strings to improve reasoning and an accuracy of the LLM.

The data processing system 105 can include at least one policy generator 135, which can be a module, script, library, or function. The policy generator 135 may receive the information extracted by the information extractor 125 (e.g., first generated text string and second generated text string, attributes, etc.) and compare the information to a number of attributes. For example, the policy generator 135 compares the information to attributes (e.g., parts, sections, etc.) to determine if the policy is defined. In some embodiments, the policy generator 135 compares the first generated text string and the second generated text string to 72 attributes. For example, responsive to the policy being types of leaves, the attributes may include, number of types, number of days per type, requirements for taking the leave per type, etc. As another example, each of the attributes can be thresholds (e.g., plurality of thresholds, etc.) that the policy generator 135 compares the information to. Responsive to the policy generator 135 determining that the extracted information does not include all the attributes for the policy (e.g., the information not satisfying each of the thresholds, etc.), the policy generator 135 may generate a notification to the user to input the information for the attribute. For example, the policy generator 135 can compare the extracted information to at least one attribute threshold (e.g., threshold, etc.) and in response to the extracted information being below the attribute threshold, the policy generator 135 generates a notification.

The notification can request user input, and the policy generator 135 can receive the user input after generating the notification. The policy generator 135 can use the user input to update the extracted information, such as the attributes, and compare the updated extracted information to the attribute threshold. After determining that the extracted information is greater than or equal to the attribute threshold, the policy generator 135 can store the attributes and/or mark the policies as complete.

The policy generator 135 may also perform a validation (e.g., confidence, etc.) check to ensure that the LLMs of the information extractor 125 did not include any hallucinations (e.g., factually incorrect responses, etc.). For example, each of the generated text strings may include text strings thresholds. The policy generator 135 may compare the generated text strings to the text string thresholds. Responsive to, for example, the first generated text string or the second generated text string being below a first text string threshold or above a second text string threshold, respectively, the policy generator 135 can notify the user. For example, responsive to the first generated text string being directed towards a number of days of leave per year, the policy generator 135 compares a numerical value of the first generated text string to a respective numerical first text string threshold and numerical second text string threshold. After determining that the numerical value is greater than or equal to the numerical first text string threshold and less than or equal to the numerical second text string threshold, the policy generator 135 can determine that the numerical value passes the validation check. After determining that the numerical value is less than the numerical first text string threshold or greater than the numerical second text string threshold, the policy generator 135 can determine that the numerical value fails the validation check. The policy generator 135 can determine a confidence value of the generated text strings of the information extractor 125 based on results of the validation check. For example, the policy generator 135 can determine the confidence value based on a weighted sum of the results of the validation check.

The policy generator 135 can include at least two machine learning models, such as at least two LLMs. The policy generator 135 may include an LLM to implement a CoT to evaluate results of the validation check. For example, the policy generator 135 can check for any hallucinations, and use a CoT to validate results of the check for hallucinations in the LLM. The policy generator 135 can evaluate the confidence value and each of the results of the validation checks using a CoT. The policy generator 135 can include an LLM to judge results of the information extractor 125. For example, the policy generator 135 can evaluate a quality of results of the information extractor 125. In various implementations, in response to the quality or the confidence value being below a respective threshold (e.g., quality threshold, confidence threshold), the policy generator 135 can instruct the information extractor 125 to perform generation of the generated text strings again. In other implementations, the policy generator 135 can generate a loss value according to the quality or the confidence value, and can adjust weights of the LLMs of the information extractor 125 according to the loss value.

The policy generator 135 can, after determining that the information extractor 125 did not include hallucinations, identify the text coordinates of the pages associated with the generated text strings. The policy generator 135 can perform OCR on the pages associated with the generated text strings, and store the OCR of the pages. The policy generator 135 can determine the text coordinates of the pages relative to the input documents input into the information extractor 125. The policy generator 135 can store an association (e.g., token, identifier, etc.) of the pages with the corresponding generated text strings in the database 145. Consequently, to generate a policy associated with the input documents, the policy generator 135 can use the association to identify both the pages and the corresponding generated text strings (e.g., attributes of the pages, etc.) of the policy.

For example, the policy generator 135 includes a machine learning model for a user to input queries into. The policy generator 135 may provide responses to the user based on the pages and attributes extracted from the input documents. For example, the user may ask "as an at-will employee, how many personal days do I receive per year?" The policy generator 135 may analyze the query, and extract information from the database 145 and respond with a generated text string of "2 days." To extract the information, the policy generator 135 can match the query to a field, determine the generated text string associated with the field, and provide both the pages in the input documents and the generated text string for the user. For example, the policy generator 135 can highlight the extracted text string on the pages of the input document associated with the generated text string for the user.

The policy generator 135 generator can perform additional post processing on the extracted attributes. For example, the policy generator 135 can ensure formatting and readability of the stored pages associated with the extracted attributes. To do so, the policy generator 135 can implement an OCR as well as spelling or grammar tools on the stored pages to ensure formatting and readability match a stored schema. For example, the policy generator 135 can include at least one stored schema associated with data formatting, and the policy generator 135 can adjust the stored pages to match the stored schema. As another example, the policy generator 135 can convert the generated text strings into shorter sentences or using simpler language. For example, the policy generator 135 can shorten the generated text strings while maintaining clarity, and store the generated text strings along with the association to respective pages and fields in the database 145.

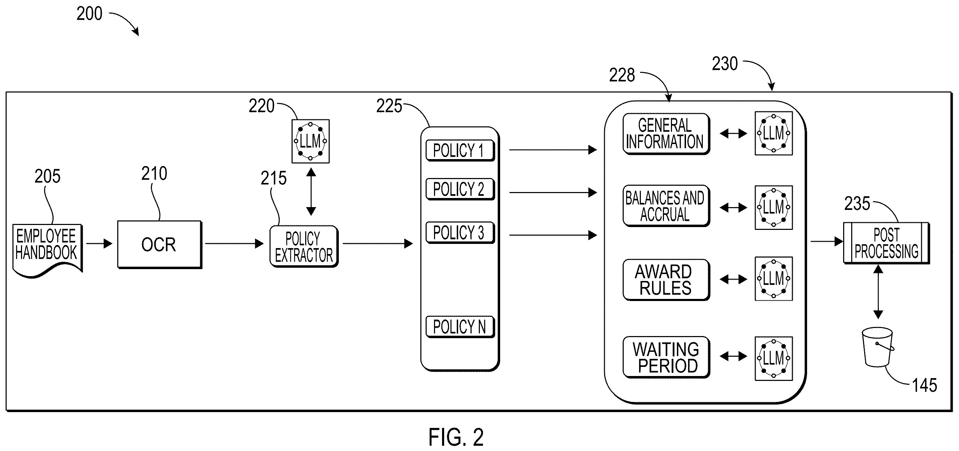

FIG. 2 is an illustrative example of a process 200 for processing input documents. The process 200 can be implemented by the information extractor 125 and the policy generator 135. The process 200 may begin once a user provides at least one employee handbook 205 to the system 100. For example, the process 200 may begin by the user providing an employee handbook 205 (e.g., a plurality of input documents, plurality of employee documents, etc.). The information extractor 125 can receive the employee handbook 205, and input the employee handbook 205 into an OCR 210 to transform the input documents into a machine-readable format. Once the employee handbook 205 is converted, the information extractor 125 can apply a first LLM 220 to extract and determine policies in the employee handbook 205. To extract the policies, the information extractor 125 can include a policy extractor 215 which can extract the policies using the first LLM 220. For example, the policy extractor 215 detects policies and fields on the employee handbook 205, and determines which policies the fields belong to.

The information extractor 125 may determine the fields the policies belong to based on a proximity (e.g., distance on a page, etc.) of the fields to the policies. For example, the information extractor 125 may first determine the policies in the input documents, and then determine the fields based on the separation of the policies on the input documents. The information extractor 125 can extract the extracted text strings associated with the policies from the employee handbook 205.

Following output of the policies 225, the information extractor 125 can compile the policies 225 and provides the policies 225 to a plurality of LLMs 230 (e.g., second LLMs 230, etc.). The LLMs 230 may be included in the information extractor 125, which provides threads (e.g., the text strings 155, etc.) to each of the policies 225 to determine the generated text strings of each policy 225. The LLMs 230 can provide the text strings 155 in parallel. For example, a first field 228 (e.g., "General Information", etc.) can be input into a first LLM 230 and a second field 228 (e.g., "Balances and Accrual", etc.) can be input into a second LLM 230. The first LLM 230 and the second LLM 230 can determine, in parallel, that the first field 228 and the second field 228 are included in a policy 225 of paid time off (e.g., related to paid time off, etc.). The first LLM 230 and the second LLM 230 can extract text strings 155 related to the field to determine generated text strings of the first field 228 and the second field 228. For example, the first LLM 230 can determine generated text strings for general information of paid time off using the text strings 155, and the second LLM 230 can determine generated text strings for guidelines for balances and accrual for paid time off using the text strings 155. The first LLM 230 and the second LLM 230 can generate generated text strings including the general information and balances and accrual.

Following the determination of the generated text strings, the policy generator 135 can perform post processing 235 on the generated text strings and store the generated text strings for each of the policies 225 detected in the employee handbook 205 in the database 145.

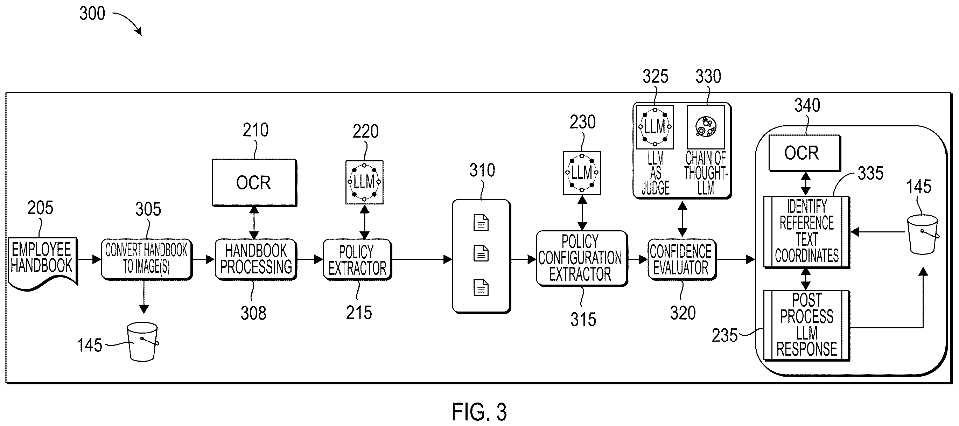

FIG. 3 is an illustrative example of process 300 which, in some embodiments, includes the process 200. The process 300 can be implemented by the information extractor 125 and the policy generator 135. The information extractor 125 can receive the employee handbook 205 from the user, and convert the employee handbook 205 into images 305. The information extractor 125 can store the images 305 in the database 145. Following conversion of the employee handbook 205 into images 305, the information extractor 125 can perform handbook processing 308 on the employee handbook 205 using the OCR 210. The handbook processing 308 can transform the employee handbook 205 into a machine-readable format. The information extractor 125 can then provide the machine-readable format of the employee handbook 205 to the policy extractor 215. The policy extractor 215 can use the first LLM 220 to detect and determine policies (e.g., policies 225, etc.) and fields (e.g., fields 228, etc.) of the employee handbook 205.

The information extractor 125 can determine which pages 310 of the employee handbook 205 that the policies are located on. For example, the information extractor 125 can determine that a first policy is on a first page 310, and a second policy is on a second page 310 and third page 310. The information extractor 125 can determine which and a number of pages 310 each policy of the employee handbook 205 is located on. The information extractor 125 can use the LLM 220 to determine the pages 310 of the policies. In various implementations, the information extractor 125 can use the OCR 210 or any other model to determine the pages 310 associated with each policy and field. In various implementations, the information extractor 125 determines which and a number of pages 310 each field of the employee handbook 205 is located on. The information extractor 125 can store the pages 310 and the associations of at least one of the fields, policies, or extracted text strings in the database 145.

In various embodiments, the information extractor 125 includes a policy configuration extractor 315. The policy configuration extractor 315 is configured to determine the extract text strings and output the generated text strings. The policy configuration extractor 315 can use the LLMs 230 to extract the extracted text strings and generate the generated text strings for each of the policies of the employee handbook 205. The policy configuration extractor 315 can implement at least a portion of the process 200 as described above to determine generated text strings of each of the policies.

The policy extractor 215 can provide the policy configuration extractor 315 with the pages 310 associated with each of the policies and fields, and the policy configuration extractor 315 can extract the extracted text strings from each policy and field by processing only the pages 310 associated with the policy and the field. For example, the policy configuration extractor 315 can receive a first field of a first policy associated with a first page 310 of the employee handbook 205. The policy configuration extractor 315 can process the first page 310 to extract the extracted text strings and generate the generated text stings of the first field.

After determining the extracted text string for each field using the associated pages 310, the policy configuration extractor 315 can output the generated text strings. The policy configuration extractor 315 can apply each field and associated page 310 to the LLMs 230 in parallel to determine both the extracted text strings and the generated text strings of each policy and field of the employee handbook 205.

After generation of the generated text strings, the information extractor 125 can provide the generated text strings to the policy generator 135. In various embodiments, the policy generator 135 include a confidence evaluator 320 that receives the generated text strings. The confidence evaluator 320 is configured to evaluate the generated text strings output by the policy configuration extractor 315. The confidence evaluator 320 can judge a quality and determine any hallucinations in the LLMs 230 from the generated text strings. To do so, the policy generator 135 includes at least a third LLM 325. The third LLM 325 is configured to judge the LLMs 230. The third LLM 325 can act as a judge for the generated text strings, and evaluate at least a quality of the generated text string. For example, the third LLM 325 can evaluate grammar, spelling, and other such features of the generated text strings.

The third LLM 325 can generate at least one score for the generated text strings based on the evaluation. For example, the third LLM 325 can evaluate at least one of the grammar or spelling of the generated text strings, and generate a score based on the evaluation. The score can be at least one of a numerical, rubric-based, or binary score, and can indicate the quality of the generated text string. To generate the score, the third LLM 325 can be provided with a prompt, such as to evaluate the generated text string on coherence, grammar, and clarity. Based on the generated text string and using the prompt, the third LLM 325 can generate both the score indicative of the coherence, grammar, and clarity of the generated text string and rationale (e.g., explanation, etc.) for the score.

In various implementations, the policy generator 135 includes at least a fourth LLM 330. The fourth LLM 330 is configured to implement CoT to check for hallucinations within the generated text strings, and validate the generated text strings. For example, the fourth LLM 330 can use the text string 155 on a same first extracted text string to generate a text string, and compare the generated text string to a first generated text string output by the LLM 230. The fourth LLM 330 can generate at least one confidence value based on the comparison.

In various implementations, in response to at least one of the score or the confidence value being below a respective threshold, the policy configuration extractor 315 can output generated text strings again, or the policy generator 135 can modify weights of the policy configuration extractor 315 using a loss value determined from at least one of the score or the confidence value. In various implementations, the third LLM 325 and the fourth LLM 330 can be a same LLM.

After determining that at least one of the score or the confidence value is above or equal to the respective thresholds, the policy generator 135 can identify reference text coordinates 335 (e.g., Cartesian coordinates, etc.) for each of the generated text strings. For example, the policy generator 135 can determine the page 310 associated with each of the generated text strings, and further identify the coordinates 335 of the generated text string on the page 310. To do so, the policy generator 135 can include an OCR 340. The policy generator 135 can extract the associated pages 310 with the generated text strings from the database 145, and provide the pages 310 to the OCR 340. The OCR 340 can process the pages 310 and identify coordinates 335 of the generated text string on the page 310.

Following identification of the coordinates 335, the policy generator 135 can perform post processing on the generated text string, such as simplifying the generated text string, and store the generated text string. The policy generator 135 can store the generated text string along with the associated pages 310 and coordinates 335 for each generated text string in the database 145. The policy generator 135 can use the coordinates 335 stored in the database 145 to highlight at least one portion of the page 310 that the generated text string is located in response to a user request or input.

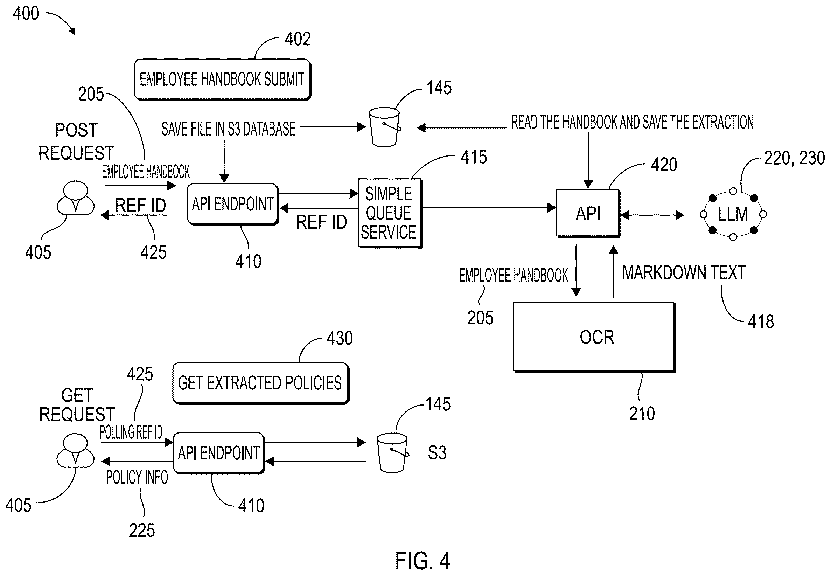

FIG. 4 is an illustrative example of a process 400, which, in some embodiments, is included in the process 200 or process 300 to transform the employee handbook 205 into machine-readable text and provide extracted policies 225 to a user 405. The process 400 can include a process 402 to extract policies 225 from the employee handbook 205. The process 402 can include a user 405 providing the employee handbook 205 to an application program interface (API) endpoint (e.g., a uniform resource locator (URL), user interface, etc.) 410, which is then input into a simple queue service (SQS) 415. The system 100 can include the API endpoint 410 and the SQS 415. The SQS 415 can place the employee handbook 205 in a queue for processing. The employee handbook 205 can be provided to the OCR 210 to transform the employee handbook 205 into markdown text 418 (e.g., machine-readable text, etc.) and provided to the LLM 220 or LLM 230 to determine policies 225 and extract extracted text strings for each policy 225. The OCR 210 can receive the employee handbook 205 as an input and output the markdown text 418.

The policies 225 can then be saved to the database 145 and can be retrieved by the user 405 via the API endpoint 410. An API 420 can include the API endpoint 410, and can transfer data between the SQS 415, the OCR 210, the LLM 220 or 230, and the database 145, as shown in FIG. 4. The SQS 415 can provide a reference identifier (ID) 425 to the API endpoint 410 which can provide the user 405 with the reference ID 425. The reference ID 425 can be associated with the employee handbook 205 provided by the user 405 and the policies 225 extracted from the employee handbook 205 and stored in the database 145.

The process 400 can include a process 430 for the user 405 to receive the policies 225. The user 405 can input the reference ID 425 into the API endpoint 410. The API 420 can use the reference ID 425 to extract the policies 225 associated with the reference ID 425 from the database 145, and provide the policies 225 to the user 405. For example, the policies 225 can be displayed on a user interface (e.g., user interface 600, etc.)

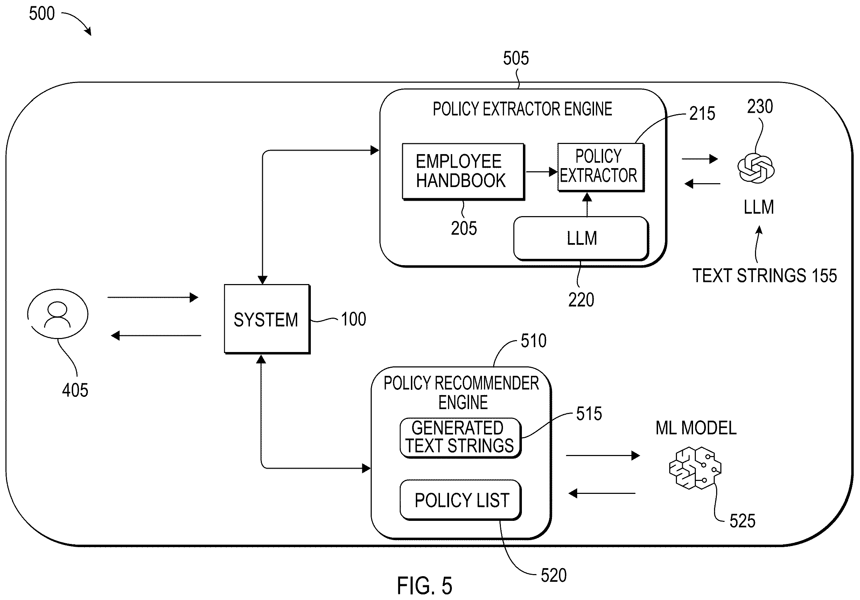

FIG. 5 is an illustrative example of a process 500, which may be implemented by the system 100. The process 500 can include a user 405 providing the employee handbook 205 to the system 100, which can be an artificial intelligence (AI) guided system. In various implementations, the system 100 includes a policy extractor engine 505. The policy extractor engine 505 is configured to extract policies from the employee handbook 205 provided by the user 405. The system 100 can provide the employee handbook 205 to a policy extractor engine 505 which can include the information extractor 125. After converting the employee handbook 205 to machine-readable text, the information extractor 125 can provide the employee handbook 205 to the policy extractor 215 to determine policies in the employee handbook 205 and extract the extracted text strings for each of the policies using the LLM 220. The information extractor 125 can provide the extracted text strings to the LLM 230 which can use the text strings 155 to output the generated text strings for each of the policies.

In various implementations, the LLM 220 can use the text strings 155 as a schema to generate information (e.g., generated text strings, etc.) from each of the policies. In such cases, the process 500 may not include the LLM 230. In various implementations, the LLMs 230 extract the extracted text strings and generate the generated text strings using the text strings 155, and the LLM 220 determines the policies and fields in the employee handbook 205.

In various implementations, the system 100 includes a policy recommender engine 510. The policy recommender engine 510 can include the policy generator 135. The policy recommender engine 510 is configured to receive the generated text strings (e.g., generated text string 515, etc.) and a policy list 520 from the policy extractor engine 505. The policy list 520 can include a list of the policies 225 extracted by the policy extractor 215. Each of the generated text strings 515 can be associated with one of the policies 225 on the policy list 520. The policy list 520 can include fields for each of the policies 225. For example, the policy list 520 can include a policy 225 related to time off, and the fields for the policy 225 can include waiting period, balance and accrual, etc. Each of the generated text strings 515 can be further associated to at least one of the fields of at least one policy 225.

In various implementations, the policy generator 135 includes at least one machine learning model 525. The machine learning model 525 is configured to communicate with the policy recommender engine 510 to provide responses to the user 405. For example, the user 405 can input a query into the system 100 related to the policy list 520. To provide the response, the machine learning model 525 can process the query, determine which policy 225 from the policy list 520 the query is related to, and use the generated text strings 515 associated with the policy 225 to generate a response to the user 405. For example, in response to the query form the user 405 being, "how many days of PTO does a new employee have?" The machine learning model 525 can process the query and parse through the policy list 520 and select the policy 225 related to time off. Using the policy 225, the machine learning model 525 can identify generated text strings 515 associated with the policy 225, and identify which generated text string 515 relates and/or responds to the query. The machine learning model 525 can identify the generated text string 515 with a numerical value, such as "15 days," and generate a response using the identified generated text string 515. The system 100 can provide the response to the user 405 via, for example, a user interface.

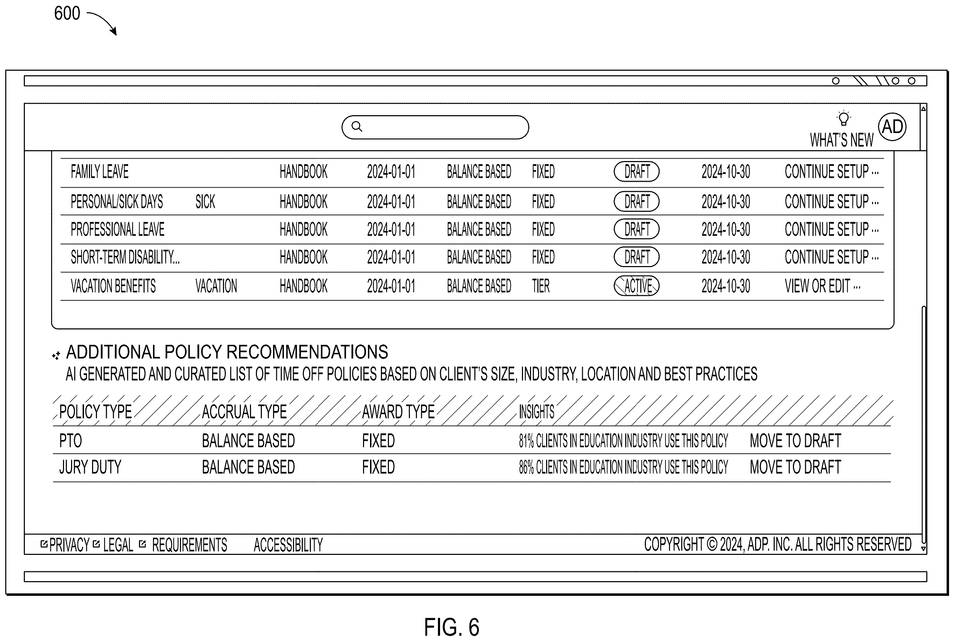

FIG. 6 is an example user interface 600, which may be generated by the system 100. The user interface 600 can depict various policies, such as "Family Leave," "Personal/Sick Days," etc. The policies can be categorized into groups, such as "Sick" or "Vacation." The policies can be indicated to be included in the handbook (e.g., the employee handbook 205, etc.) and can include the date the policies were created by the system 100 (e.g., "2024-01-01", etc.) as well as a recently edited date (e.g., "2024-10-30", etc.). The policies can be input by a received handbook from the user by the system 100, or can be created by the system 100 according to user input to generate a draft handbook.

"Balance-based," "Fixed," and "Tier" can refer to the accrual and award types of the attributes in each of the policies. For example, "Balance-based" can refer to the policy being flexible and having a total balance, indicating that an employee can take, for example, a maximum of 10 sick days a year (e.g., total balance, etc.) which can be taken at any time during the year. "Fixed" can indicate that the total balance is same for all employees while "Tier" can indicate that the total balance is different for employees. For example, an employee at the company for 10 years may have more vacation benefits than an employee at the company for 5 years.

"Draft" can indicate that the polices are still being edited or refined while "Active" can indicate that the policy is finished and published for viewing. "Continue Setup..." can indicate that the system 100 is requesting further information from the user for the respective policy. For example, the policy with a corresponding "Continue Setup..." may be missing attributes, and the system 100 can be requesting input from the user for the missing attributes. The "Continue Setup..." can be an example of the notification generated by the policy generator 135 in response to the extracted text strings being below the attribute threshold. "View or Edit..." can indicate that the policy is complete and includes the attributes (e.g., 72 attributes, etc.), and can be viewed or edited further by the user.

The user interface 600 can include policy recommendations. The system 100 can request input from the user regarding at least one of a size, industry, or location of a respective company the handbook is associated with, and can generate policy recommendations based on the user input. The industry of the client may be stored in the database 145 or may be provided by the client. For example, the system 100 can generate "PTO" and "Jury Duty" after determining the policies in the handbook, and comparing the policies to a list corresponding to at least one of the size, industry, or location of the company. The system 100 can store at least one list of policies, and can categorize the at least one list by at least one of size, industry, or location of companies. The list of policies can include at least the accrual type and award type for each policy and can include insights. The insights can include at least a percentage of peer companies in an industry of the company that includes the policy. The insights can be stored in the list of policies or generated by the system 100. The system 100 may recommend the policies with a highest percentage of peer companies in the industry including the policy. The user interface 600 can include an indication to move the recommended policies into a draft of the handbook.

For example, following validation, the policy generator 135 may generate the detected policies on the user interface 600 and provide a recommendation (e.g., policy recommendation, etc.). The recommendation may include modifying one or more attributes and/or values of the attributes. Alternatively, or in addition, the recommendation may include adding or removing one or more policies. The user interface 600 may also include the list of policies as well as attributes for each of the policies determined by, for example, the policy generator 135. The user interface 600 may also allow the user to input queries for the policy generator 135 to generate information regarding the policies.

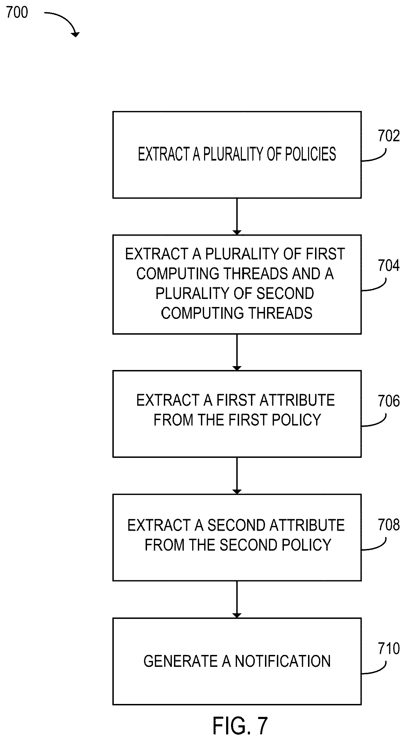

FIG. 7 illustrates a block diagram of an example method 700 (e.g., computer-implemented method 700, etc.) for extracting and storing policies that can be implemented by the system 100 and used by at least one of the processes 200, 300, 400, or 500. The method 700 can be performed by one or more processors (e.g., the processor 107, etc.). The method 700 can be performed by one or more systems or components depicted in FIG. 1.

The method 700 can include extracting a plurality of policies (e.g., policies 225, etc.) from an input document (e.g., employee handbook 205, etc.) using a first machine learning model (e.g., LLM 220, etc.) at 702. The method 700 can include extracting a plurality of first computing threads (e.g., text strings 155, etc.) corresponding to a first policy of the policies and a plurality of second computing threads (e.g., text strings 155, etc.) at 704. The first computing threads and the second computing threads can be extracted from a computing thread database and each of the computing threads in the database can be associated with at least one policy. Consequently, the method 700 can include extracting the computing threads associated with the first policy and the second policy.

The method 700 can include extracting a first attribute from the first policy via one of the first computing threads at 706. The one of the first computing threads can correspond to the first attribute. The method 700 can include extracting a second attribute from the second policy via one of the second computing threads at 708. The one of the second computing threads can correspond to the second attribute. The first attribute and the second attribute can be extracted using second machine learning models. The method 700 can include generating a notification request user input at 710. The notification can be generated after determining that the first attribute and the second attribute are below an attribute threshold.

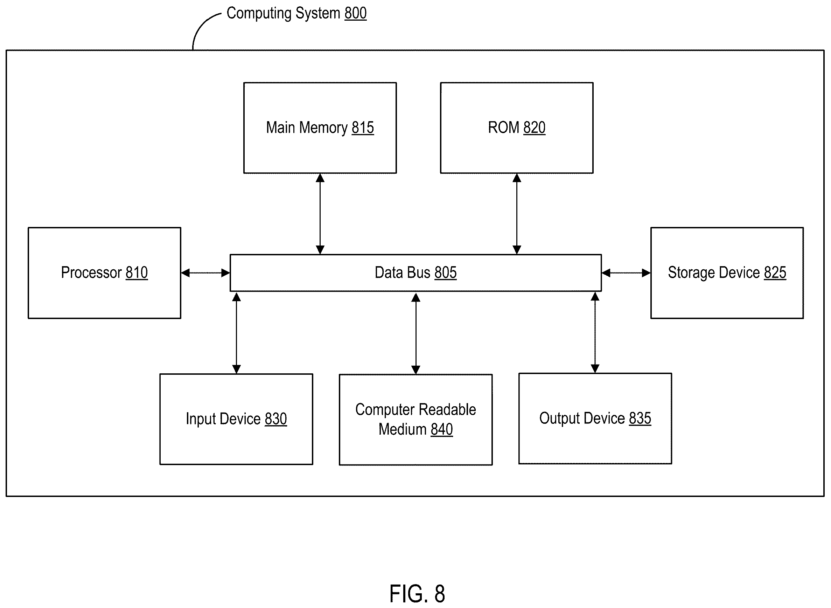

FIG. 8 illustrates a block diagram of a computing system 800 for implementing the implementations of the technical solutions discussed herein, in accordance with various aspects. FIG. 8 illustrates a block diagram of an example computing system 800, which can also be referred to as the computing system 800. Computing system 800 can be used to implement elements of the systems and methods described and illustrated herein. Computing system 800 can be included in and executed by any device (e.g., a server, a computer, a cloud computing environment, a data processing system, etc.).

Computing system 800 can include at least one bus data bus 805 or other communication device, structure, or component for communicating information or data. Computing system 800 can include at least one processor 810 or processing circuit coupled to the data bus 805 for executing instructions or processing data or information. Computing system 800 can include one or more processors 810 or processing circuits coupled to the data bus 805 for exchanging or processing data or information along with other computing systems 800. Computing system 800 can include one or more main memories 815, such as a random-access memory (RAM), dynamic RAM (DRAM), cache memory or other dynamic storage device, which can be coupled to the data bus 805 for storing information, data and instructions to be executed by the processor(s) 810. Main memory 815 can be used for storing information (e.g., data, computer code, commands, instructions, etc.) during execution of instructions by the processor(s) 810.

Computing system 800 can include one or more read only memories (ROMs) 820 or other static storage device 825 coupled to the data bus 805 for storing static information and instructions for the processor(s) 810. Storage devices 825 can include any storage device, such as a solid-state device, magnetic disk or optical disk, which can be coupled to the data bus 805 to persistently store information and instructions.

Computing system 800 can include at least one computer readable medium 840 (e.g., non-transitory computer readable medium, etc.). The computer readable medium 840 may be a tangible computer readable medium storage storing computer readable program code (e.g., computer program product, computer-executable instructions, etc.) for execution by the, for example, the processor 810 and/or the processor 108. The computer readable storage medium may be, for example, but not limited to, an electronic, magnetic, optical, electromagnetic, infrared, holographic, micromechanical, or semiconductor system, apparatus, or device, or any suitable combination of the foregoing.

Computing system 800 can be coupled via the data bus 805 to one or more output devices 835, such as speakers or displays (e.g., liquid crystal display, active-matrix display, etc.) for displaying or providing information to a user. The output devices 835 can display, for example, the user interface 600. Input devices 830, such as keyboards, touch screens or voice interfaces, can be coupled to the data bus 805 for communicating information and commands to the processor(s) 810. Input device 830 can include, for example, a touch screen display (e.g., output device 835, etc.). Input device 830 can include a cursor control, such as a mouse, a trackball, or cursor direction keys, for communicating direction information and command selections to the processor(s) 810 for controlling cursor movement on a display. The input device 830 can enable a user to interact with the user interface 600. User interaction may cause the computing system 800 to highlight portions of the user interface 600.

The processes, systems and methods described herein can be implemented by the computing system 800 in response to the processor 810 executing an arrangement of instructions contained in main memory 815. Such instructions can be read into main memory 815 from another computer-readable medium, such as the storage device 825. Execution of the arrangement of instructions contained in main memory 815 causes the computing system 800 to perform the illustrative processes described herein. One or more processors 810 in a multiprocessing arrangement can also be employed to execute the instructions contained in main memory 815. Hard-wired circuitry can be used in place of or in combination with software instructions together with the systems and methods described herein. Systems and methods described herein are not limited to any specific combination of hardware circuitry and software.

Although an example computing system has been described in FIG. 8, the subject matter including the operations described in this specification can be implemented in other types of digital electronic circuitry, or in computer software, firmware, or hardware, including the structures disclosed in this specification and their structural equivalents, or in combinations of one or more of them.

The foregoing examples have been provided merely for the purpose of explanation and are in no way to be construed as limiting of the present disclosure. While aspects of the present disclosure have been described with reference to an exemplary implementation, it is understood that the words which have been used herein are words of description and illustration, rather than words of limitation. Changes can be made, within the purview of the appended claims, as presently stated and as amended, without departing from the scope of the present disclosure in its aspects. Although aspects of the present disclosure have been described herein with reference to particular means, materials and implementations, the present disclosure is not intended to be limited to the particulars disclosed herein; rather, the present disclosure extends to all functionally equivalent structures, methods and uses, such as are within the scope of the appended claims.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs (e.g., one or more circuits of computer program instructions, encoded on one or more computer storage media for execution by, or to control the operation of data processing apparatuses, etc.). Alternatively, or in addition, the program instructions can be encoded on an artificially generated propagated signal (e.g., a machine-generated electrical, optical, or electromagnetic signal, etc.) that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage, etc.). The operations described in this specification can be implemented as operations performed by a data processing apparatus on data stored on one or more computer-readable storage devices or received from other sources.

The terms "computing device," "component," or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry (e.g., an FPGA (field programmable gate array) or an ASIC (application specific integrated circuit), etc.). The apparatus can also include, in addition to hardware, code that creates an execution environment for the computer program in question (e.g., code that constitutes processor firmware, a protocol stack, a database management system, an operating system, a cross-platform runtime environment, a virtual machine, or a combination of one or more of them, etc.). The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document, etc.), in a single file dedicated to the program in question, or in multiple coordinated files (e.g., files that store one or more modules, sub programs, or portions of code, etc.). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry (e.g., an FPGA (field programmable gate array) or an ASIC (application specific integrated circuit), etc.). Devices suitable for storing computer program instructions and data can include nonvolatile memory, media and memory devices, including by way of example semiconductor memory devices (e.g., EPROM, EEPROM, and flash memory devices; magnetic disks, e.g., internal hard disks or removable disks; magneto optical disks; and CD-ROM and DVD-ROM disks, etc.). The processor and the memory can be supplemented by, or incorporated in, special purpose logic circuitry.

The subject matter described herein can be implemented in a computing system that includes a back end component (e.g., as a data server, or that includes a middleware component, an application server, or that includes a front end component, a client computer having a graphical user interface or a web browser through which a user can interact with an implementation of the subject matter described in this specification, or a combination of one or more such back end, middleware, or front end components, etc.). The components of the system can be interconnected by any form or medium of digital data communication (e.g., a communication network, etc.). Examples of communication networks include a local area network ("LAN") and a wide area network ("WAN"), an inter-network (e.g., the Internet, etc.), and peer-to-peer networks (e.g., ad hoc peer-to-peer networks, etc.).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts, and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including," "comprising," "having," "containing," "involving," "characterized by," "characterized in that," and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or implementation, and references to "an implementation," "some implementations," "one implementation" or the like are not necessarily mutually exclusive and are intended to indicate that a particular feature, structure, or characteristic described in connection with the implementation can be included in at least one implementation or implementation. Such terms as used herein are not necessarily all referring to the same implementation. Any implementation can be combined with any other implementation, inclusively or exclusively, in any manner consistent with the aspects and implementations disclosed herein.

References to "or" can be construed as inclusive so that any terms described using "or" can indicate any of a single, more than one, and all of the described terms. References to at least one of a conjunctive list of terms can be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts, such as substitutions, changes, and omissions, can be made in the design, operating conditions, and arrangement of the disclosed elements and operations without departing from the scope of the present disclosure.

## Claims

1. A system for processing input documents, the system comprising:
one or more processors, coupled with memory, the one or more processors configured to:
receive an input document;
determine that the input document is associated with a first field and a second field;
extract a first extracted text string corresponding to the first field and a second extracted text string corresponding to the second field;
generate a first generated text string associated with the first field based on the first extracted text string; and
generate a second generated text string associated with the second field based on the second extracted text string.

2. The system of claim 1, wherein the one or more processors are configured to:
extract the first extracted text string and the second extracted text string using a first machine learning model;
generate the first generated text string using a second machine learning model; and
generate the second generated text string using a third machine learning model.

3. The system of claim 2, wherein the first generated text string and the second generated text string are generated in parallel; and/or
wherein the first machine learning model, the second machine learning model, and the third machine learning model are large language models (LLMs); and/or
wherein the one or more processors are further configured to:
determine a plurality of stored text strings associated with the first field and the second field;
wherein the second machine learning model and the third machine learning model uses the stored text strings to generate the first generated text string based on the first extracted text string and the second generated text string based on the second extracted text string.

4. The system of claim 2 or 3, wherein the one or more processors are further configured to:
determine a first page of the input document associated with the first field and a second page associated with the second field;
provide the first page to the first machine learning model to extract the first extracted text string; and
provide the second page to the first machine learning model to extract the second extracted text string; and optionally
wherein the one or more processors are further configured to:
store the first generated text string and a first association between the first generated text string, the first field, and the first page; and
store the second generated text string and a second association between the second generated text string, the second field, and the second page.

5. The system of any preceding claim, wherein the one or more processors are further configured to:
compare the first generated text string and the second generated text string to a plurality of attributes, the attributes corresponding to the first field and the second field; and
after determining that the first generated text string and the second generated text string does not include at least one of the attributes, generate a notification.

6. The system of any preceding claim, wherein the one or more processors are further configured to:
compare the first generated text string to a first text string threshold and a second text string threshold and the second generated text string to the first text string threshold and the second text string threshold; and
after determining that the first generated text string is below the first text string threshold or above the second text string threshold or that the second generated text string is below the first text string threshold or above the second text string threshold, generate a notification.

7. The system of any preceding claim, wherein:
the first extracted text string and the second extracted text string are associated with a first policy and a second policy of the input document; and
the first policy comprises the first field and the second policy comprises the second field;
and/or
the system wherein the one or more processors are further configured to:
receive a user query; and
generate a response to the user query based on the first generated text string and the second generated text string using a fourth machine learning model.

8. The system of any preceding claim, wherein the one or more processors are further configured to:
validate the first generated text string and the second generated text string using at least one machine learning model, wherein the at least one machine learning model generates at least one score and at least one confidence value for the first generated text string and the second generated text string, the at least one machine learning model implementing chain of thoughts to determine the at least one confidence value.

9. A computer-implemented method comprising:
extracting, by a first machine learning model, a plurality of policies from an input document;
extracting a plurality of first computing threads corresponding to a first policy of the policies and a plurality of second computing threads corresponding to a second policy of the policies;
extracting, using one of a plurality of second machine learning models, a first attribute from the first policy via one of the first computing threads;
extracting, using one of the second machine learning models, a second attribute from the second policy via one of the second computing threads; and
after determining that the first attribute and the second attribute are below an attribute threshold, generating a notification requesting user input.

10. The computer-implemented method of claim 9, further comprising interpreting the first computing threads and the second computing threads;
wherein the first attribute and the second attributes are extracted according to interpretations of the first computing threads and the second computing threads, respectively.

11. The computer-implemented method of claim 9 or 10, wherein the input document comprises a plurality of pages, each of the policies associated with at least one of the pages, the computer-implemented method further comprising providing, by the first machine learning model, a plurality of first pages associated with the first policy and a plurality of second pages associated with the second policy to the second machine learning models before extracting the first attribute and the second attribute.

12. The computer-implemented method of any of claims 9 to 11, further comprising:
generating, by a third machine learning model, using chain of thoughts, at least one confidence value of the first attribute and the second attribute; and
after determining that the at least one confidence value is above a confidence threshold, comparing the first attribute and the second attribute to the attribute threshold.

13. The computer-implemented method of any of claims 9 to 12, further comprising:
after generating the notification requesting the user input, receiving the user input;
updating at least one of the first attribute or the second attribute using the user input; and
comparing the at least one of the first attribute or the second attribute to the attribute threshold; and/or
the computer-implemented method further comprising:
receiving a user query associated with the input document; and
generating a response to the user query based on the attributes.

14. A system for performing the computer-implemented method of any of claims 9 to 13.

15. A computer program product that comprises computer-executable instructions for performing the computer-implemented method of any of claims 9 to 13.
